# EUROPÄISCHE PATENTSCHRIFT

(11) **EP 2 296 798 B1**
(45) Veröffentlichungstag und Bekanntmachung des Hinweises auf die Patenterteilung: **18.09.2013**
(21) Anmeldenummer: 10717502.8
(22) Anmeldetag: 18.03.2010
(51) Int. Cl.: B01J 2/10

(54) **MISCHGRANULATOR**
MIXING GRANULATOR
GRANULATEUR MÉLANGEUR

(30) Priorität: 21.03.2009 DE 102009014328
(43) Veröffentlichungstag der Anmeldung: 23.03.2011
(73) Patentinhaber: Glatt Systemtechnik GmbH, 01277 Dresden (DE)
(72) Erfinder: PRITZKE, Heinz, 01737 Kesselsdorf OT Braunsdorf (DE)
(74) Vertreter: Pätzelt, Peter
(86) Internationale Anmeldenummer: PCT/DE2010/000352
(87) Internationale Veröffentlichungsnummer: WO 2010/108485

(56) Entgegenhaltungen:
- EP-A1- 0 385 956
- EP-A1- 0 439 689
- EP-A1- 1 350 557
- WO-A1-02/098550
- DE-A1- 2 924 342
- JP-A- 2000 354 753

## Beschreibung

### Technisches Gebiet

Die Erfindung betrifft einen Mischgranulator nach dem Oberbegriff des Anspruchs 1, insbesondere zur Herstellung eines Granulates aus beispielsweise einem festen pulverförmigen Bestandteil und einem flüssigen Bindemittel.

### Stand der Technik

Nach dem Stand der Technik sind verschiedenartige Einrichtungen zur Granulierung von.Stoffen bekannt. Hier sind Einrichtungen relevant, bei denen ein Rührwerk den zu granulierenden Stoff in einem zylindrischen Mischbehälter umwälzt und dabei ein flüssiges Bindemittel in erforderlicher Menge auf den Stoff aufgebracht wird. Dabei wird der Stoff zu Klumpen zusammen backen. Um das zu verhindern wird ein Zerhacker im Mischbehälter positioniert, der in den Bereich des durch das Rührwerk umgewälzten Stoffes eingreift und die sich bildenden Klumpen zerkleinert.

Ein derartiger Mischgranulator ist beispielsweise in der EP 0 385 956 B1 als Verfahren zur Herstellung von kugelförmigen Partikeln und eine Vorrichtung zu seiner Durchführung angegeben. Die Vorrichtung weist einen zylindrischen Mischbehälter auf, in dessen Boden die Achse eines Rührwerkes gelagert ist, wobei der Antrieb außerhalb des Mischbehälters vorgesehen ist. Im Deckel gegenüber dem Boden sind Öffnungen zum Einbringen des zu granulierenden Stoffes, eine Sprüheinrichtung zum Einführen des flüssigen Bindemittels sowie ein sich drehendes Werkzeug als Zerhacker vorgesehen. Der Deckel gehört passend zum Mischbehälter und zur Gesamtvorrichtung, d.h. das Fassungsvermögen der Vorrichtung ist in seiner Größe festgelegt.

Die EP 1 350 557 A1 beschreibt eine Einrichtung und ein Verfahren zur Nassgranulierung bei der mindestens zwei Mischbehälter mit unterschiedlichem Durchmesser an eine Platte angeflanscht werden können, in der ein Rührwerk, ein Flüssigkeitseinlass und ein Zerhacker gelagert sind.

In der Praxis eines Betriebes zur Herstellung verschiedenartiger Granulate ist es oft erforderlich, sehr unterschiedliche Mengen eines Granulates herzustellen. Für große Mengen sind kleine Granulatoren unwirtschaftlich und für kleine Mengen sind große Granulatoren unwirtschaftlich.

### Darstellung der Erfindung

Der Erfindung liegt damit als **Aufgabe** zugrunde, einen Mischgranulator der eingangs beschriebenen Art anzugeben, der flexibel für die Herstellung großer und kleiner Mengen von Granulaten wirtschaftlich eingesetzt werden kann.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Der erfindungsgemäße Mischgranulator umfasst einen zylindrischen Mischbehälter, einen Deckel, der den Mischbehälter einseitig rechtwinklig zu dessen zentrischen Achse abschließt, ein Rührwerk, welches in der zentrischen Achse im Deckel gelagert ist, und einem in einer Achse mit einem radialen Abstand zur zentrischen Achse im Deckel gelagerten Zerhacker.

Erfindungsgemäß ist der Deckel derart ausgebildet, dass er wahlweise mit mindestens zwei Behältern unterschiedlichen Durchmessers kombiniert werden kann. In einem radialen Abstand zur zentrischen Achse des Deckels ist ein Lager vorgesehen, in dem der Zerhacker in radial unterschiedlichen Positionen arretiert werden kann. Die Positionierung des Zerhackers gegenüber dem Deckel erfolgt derart, dass der Zerhacker innerhalb der wahlweise einsetzbaren Behälter die jeweils technologisch vorgegebene Position einnimmt. Zur variablen Positionierung des Zerhackers im Lager oder des Lagers mit dem Zerhacker im Deckel stehen nach dem Stand der Technik verschiedene als solche bekannte Lösungen zur Verfügung.

In Anspruch 2 ist eine vorteilhafte Ausgestaltung angegeben, bei der das Lager im Deckel drehbar ist und exzentrisch zu seiner Drehachse oberhalb des Deckels einen Exzenterbund aufweist, in dessen zentrischer Achse der Zerhacker gelagert ist. Der Exzenterbund ist in einem Positionselement (im Ausführungsbeispiel in Form einer Andruckfeder) geführt. Das Positionselement ist parallel zum Deckel an einem Abstützpunkt gelagert und übergreift mit einer Bohrung den Exzenterbund.

In vorteilhafter Weise kann das Positionselement eine Arretiereinrichtung, z.B. einen Kniehebelspanner, weisen, mit der das Positionselement nach der Einstellung der jeweiligen Position des Zerhackers gegen das Lager verspannt werden kann, derart dass das Lager im Deckel festgelegt wird. Gegebenenfalls kann dabei auch eine Dichtung zwischen Lager und Deckel vorgespannt werden. Zur genauen Festlegung der Position können im Lager Positionierstifte vorgesehen sein, die wahlweise bei Verdrehung des Lagers im Deckel und damit auch des Exzenterbundes in eine Bohrung im Positionselement eingreifen können.

Positionselement und Arretiereinrichtung können als eigenständige Elemente ausgebildet oder in einer Baueinheit, z.B. entsprechend Ausführungsbeispiel, kombiniert sein.

Entsprechend Anspruch 5 kann der Zerhacker über einen Zahnriemen von einem Antrieb mit einer Achse angetrieben werden. Dabei ist eine Spanneinrichtung vorhanden, die geeignet ist, bei Veränderung des Abstandes zwischen der Achse des Antriebes und der Achse des Zerhackers, eine gleichmäßige Spannung des Zahnriemens aufrecht zu erhalten.

Der wesentliche Vorteil der Erfindung besteht darin, dass ein Mischgranulator mit mehreren Mischbehältern verschiedener Fassungsvermögen bereitgestellt wird, wobei die Mischbehälter mit unterschiedlichen Durchmessern in wirtschaftlicher Weise mit nur einem Deckel kombiniert werden können, in dem sowohl das Rührwerk als auch ein Zerhacker gelagert ist.

### Ausführungsbeispiel

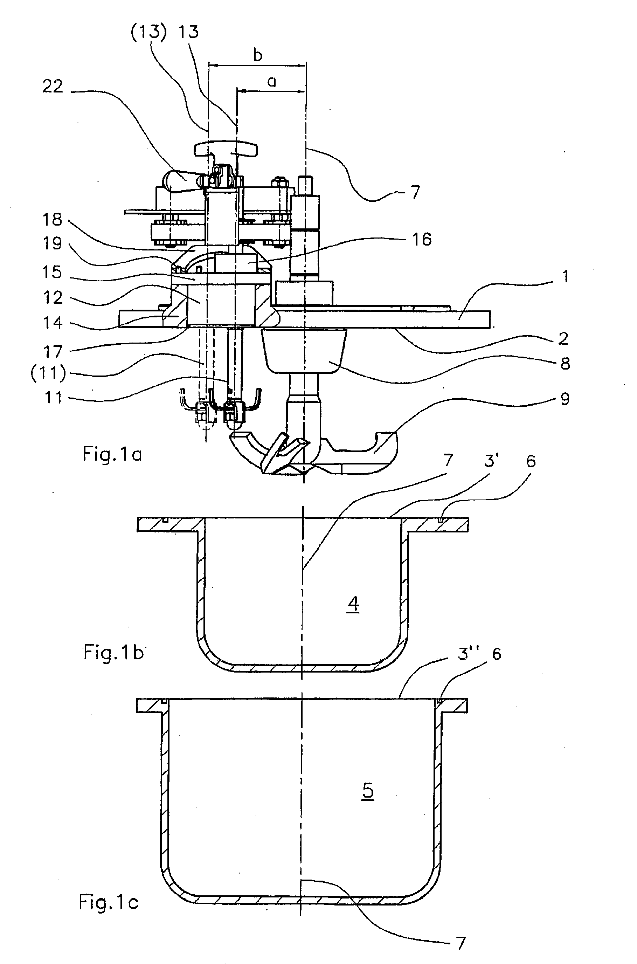

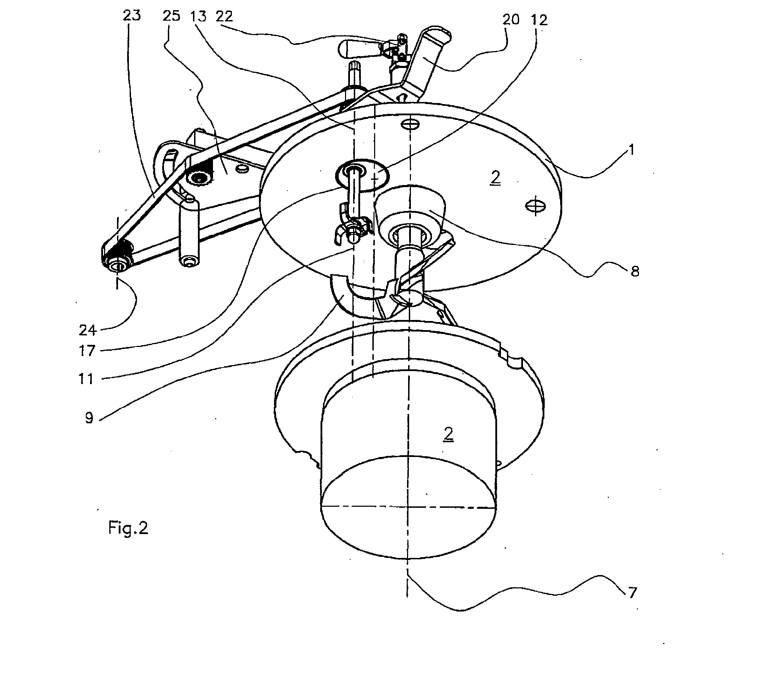

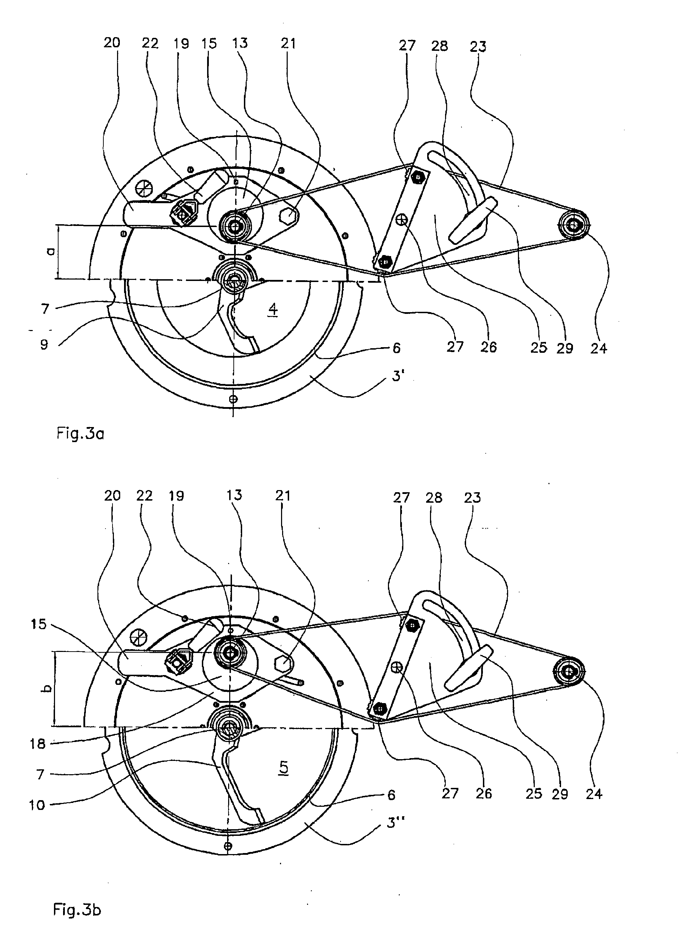

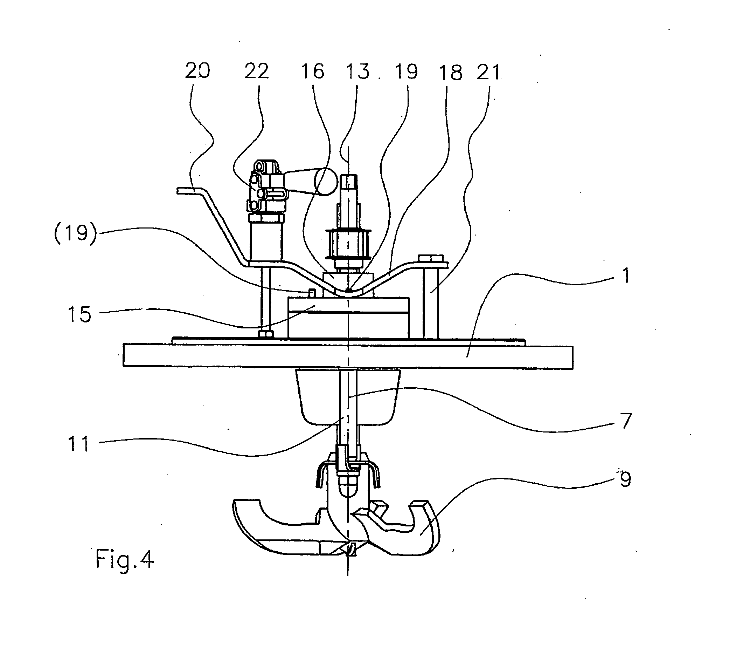

Die Erfindung wird nachstehend an einem Ausführungsbeispiel näher erläutert. Zugehörig zeigt Figur 1a die Seitenansicht auf den Deckel eines erfindungsgemäßen Mischgranulators. Die Figur 1b zeigt zugehörig zu Figur 1a einen Mischbehälter mit einem Fassungsvermögen von 1 Liter Mischgut und Figur 1c einen entsprechenden Behälter mit einem Fassungsvermögen von 6 Liter Mischgut. Figur 2 zeigt eine perspektivische Ansicht auf den Mischgranulator nach Figur 1a mit dem Mischbehälter nach Figur 1b von unten. Figur 3a zeigt eine Draufsicht mit Hälbschnitt auf den Mischgranulator nach Figur 1a mit dem Mischbehälter nach Figur 1b und Figur 3b eine Draufsicht auf den Mischgranulator nach Figur 1a mit dem Mischbehälter nach Figur 1c. Figur 4 zeigt eine Seitenansicht auf den Deckel mit einer Spannvorrichtung zur Festlegung des Zerhackers im Deckel.

Beispielhaft wird die erfindungsgemäße Lösung an einem relativ kleinen Mischgranulator für Mischgut in der Größe von 1, 2, 4 und 6 Litern beschrieben. Derartige Mischgranulatoren werden z.B. in großer Zahl in der chemischen und pharmazeutischen Industrie insbesondere zum Mischen und Granulieren von pulverförmigen bis pastösen Mischgütern eingesetzt. Für jede dieser Mengen von Mischgut gibt es einen speziellen Mischbehälter. Im Ausführungsbeispiel werden vereinfacht im Wesentlichen nur die Mischbehälter mit einem Fassungsvermögen von 1 Liter nach Figur 1b und 6 Litern nach Figur 1c erläutert.

Das Wesen der Erfindung besteht darin, dass die hier beispielhaft vier Mischbehälter mit unterschiedlichem Fassungsvermögen zum Mischen des Mischgutes alle mit dem gleichen Deckel, einschließlich des Rührwerkes und des Zerhackers kombiniert werden können.

Der in Figur 1a dargestellte Deckel 1 weist eine untere Dichtfläche 2 auf, an die der obere Rand 3' des Behälters 4 mit einem Fassungsvermögen von 1 Liter nach Figur 1b als auch der obere Rand 3" des Behälters 5 nach Figur 1c dicht angelegt werden kann. Dabei ist an den Rändern 3' und 3" ein Dichtring 6 vorgesehen. Der Deckel 1 kann wahlweise mit den Behältern 4 bzw. 5 zum Mischen verklammert werden oder die Behälter 4 bzw. 5 Werden mit dem Deckel 1 nur mit oder ohne Federkraft gegen einander verspannt. Zur genauen zentrischen Positionierung der Behälter 4 bzw. 5 gegenüber dem Deckel 1 sind in bekannter Weise in den Zeichnungen nicht dargestellte Zentrierbolzen vorgesehen.

Im Deckel 1 ist zentrisch in der Achse 7 ein Rührwerk, bestehend aus einer Rührwerkslagerung 8 und einem Mischrotor gelagert. Der Mischrotor ist jeweils einem konkreten Behälter zugeordnet und wird entsprechend ausgetauscht. In Figur 1a ist ein Mischrotor 9 passend zum Behälter 4 nach Figur 1b und in Figur 3b ist ein Mischrotor 10 passend zum Behälter 5 nach Figur 1c dargestellt.

Die erfindungsgemäße Lösung umfasst die Anordnung und Lagerung eines Zerhackers 11 im Deckel 1. Die Lagerung des Zerhackers 11 erfolgt exzentrisch in einem Lager 12, welches drehbar in einer Lagerbuchse 14 im Deckel 1 gelagert ist. Dabei ist das Lager 12 derart ausgebildet, dass die Achse 13 des Zerhackers 11 einen minimalen Abstand a zur zentrischen Achse 7 der Rührwerkslagerung 8 aufweist, wenn der Deckel 1 mit dem Behälter 4 für 1 Liter Mischgut kombiniert werden soll. Ein maximaler Abstand b wird eingestellt, wenn der Deckel 1 mit dem Behälter 5 für 6 Liter Mischgut kombiniert werden soll. Die unterschiedlichen Positionen der Achse 13 sind in Figur 1a dargestellt. Die Position des Zerhacker 11 für die Kombination mit dem Behälter 4 (Figur 1b) ist in Volllinie dargestellt und in gestrichelten Linien ist die Position des Zerhacker 11 für die Kombination mit dem Behälter 5 (Figur 1c) angedeutet. Der Abstand a zwischen der Achse 13 und der Achse 7 ist auch in Figur 3a und der Abstand b in Figur 3b ersichtlich.

Die vertikale Halterung des Lagers 12 in der Lagerbuchse 14 im Deckel 1 erfolgt über einen Bund 15 (Figur 1a). Zur exzentrischen Lagerung des Zerhackers 11 im Lager 12 weist dieses oben einen Exzenterbund 16 auf. Die Position des Exzenterbundes 16 und damit der Achse 13 des Zerhackers 11 radial zur Achse 7 der Rührwerkslagerung 8 und der Behälter 4 und 5 kann durch Drehen des Lagers 12 im Deckel 1 variiert werden. Das Drehen des Lagers 12 erfolgt manuell, wenn die zugehörige Arretiereinrichtung gelöst ist.

Die im Ausführungsbeispiel eingesetzte Arretiereinrichtung ist in Figur 4 dargestellt und besteht im Wesentlichen aus einer Andruckfeder 18 mit einem Griff 20 und einer Positionierbohrung, die den Exzenterbund 16 übergreift und auf dem Bund 15 aufliegt. Die Andruckfeder 18 ist einseitig an einem Abstützpunkt 21 gelagert und kann über einen Kniehebelspanner 22 auf der zur Achse 13 gegenüberliegenden Seite gegen den Bund 15 verspannt werden.

Die genaue Position des Exenterbundes 16 mit der Achse 13 gegenüber der Achse 7 wird mittels vier Positionierstiften 19 auf einem Teilkreis im Bund 15 festgelegt, die in eine entsprechende Bohrung in der Andruckfeder 18 eingreifen können. Mit den vier Positionierstiften 19 wird die genaue technologisch vorgegebene Position des Zerhackers 11 innerhalb der vier Behälter mit 1 Liter Mischgut (Position 4 - Figur 1b), 2 und 4 Litern sowie 6 Liter Mischgut (Position 5 - Figur 1c) festgelegt.

Aus den Figuren 3a und 3b sind die unterschiedlichen Abstände zwischen der Achse 13 des Zerhackers 11 und der Achse 7 ersichtlich. In Figur 3a ist der Abstand a passend für einen Behälter 4 mit 1 Liter Mischgut und in Figur 3b ist der Abstand b passend für einen Behälter 5 mit 6 Liter Mischgut. In der Figur 4 ist einer von zwei hintereinander liegenden Positionierstifte (19) sichtbar, der einen zwischen Abstand a und Abstand b liegende Position (60 und 120 Grad) für die Behälter mit einem Fassungsvermögen von 2 und 4 Liter Mischgut festlegt.

Nach der Positionierung des Exzenterbundes 16 mit der Achse 13 greift der Positionierstift 19 in die Bohrung in der Andruckfeder 18 ein und die Andruckfeder 18 kann über Kniehebelspanner 22 auf den Bund 15 am Lager 12 gegen die Lagerbuchse 14 gepresst werden, derart dass die gesamte Lagerung des Zerhackers 11 im Deckel 1 arretiert ist und eine Dichtung 17 zwischen dem Lager 12 und dem Deckel 1 vorgespannt ist.

Der Antrieb der Rührwerkslagerung 8 erfolgt in bekannter Weise über einen nicht dargestellten Zahnriemen. In ähnlicher Weise erfolgt auch der Antrieb des Zerhackers 11 über einen Zahnriemen 23. Da sich der Abstand der Achse 13 in jeder der vier möglichen Positionen gegenüber der festen Achse 24 des Antriebes verändert, ist zum Längenausgleich des Zahnriemens 23 eine Spanneinrichtung 25 vorgesehen, die um eine Achse 26 geschwenkt werden kann, derart dass Führungsräder 27 an der Spanneinrichtung 25 den Zahnriemen 23 im jeweils erforderlichen Maße auseinander drücken und spannen. Zur Arretierung der jeweils erforderlichen Position der Führungsräder 27 ist an der Spanneinrichtung 25 ein Schlitz 28 vorgesehen, in den eine bekannte Arretierungsschraube mit einem Befestigungsgriff 29 eingreift, mit der die Spanneinrichtung 25 festgespannt werden kann.

Nachfolgend soll die erfindungsgemäße Einrichtung in der Anwendung näher beschrieben werden. Dazu wird davon ausgegangen, dass der Mischgranulator zum Mischen eines Mischgutes mit einem Behälter 4 benutzt wurde. Jetzt soll ein anderes Mischgut mit einem Volumen von 6 Litern in einem Behälter 5 gemischt werden. Dazu wird nach dem Entfernen des Mischbehälters 4 der zugehörige Mischrotor 9 entfernt und eine erforderliche Reinigung des Deckels 1 und des Zerhackers 11 durchgeführt. Dabei kann es auch vorteilhaft sein, auch den Messerkopf des Zerhackers 11 auszutauschen. Dazu ist lediglich die zugehörige Verschraubung zu lösen und ein gereinigter Messerkopf anzubringen.

Der Behälter 5 wird bereit gestellt und der zugehörige Mischrotor 10 an der Rührwerkslagerung 8 befestigt. Danach wird die Arretierungsschraube mit einem Befestigungsgriff 29 an der Spanneinrichtung und der Kniehebelspanner 22 gelöst, derart dass die Andruckfeder 18 angehoben und das Lager 12 innerhalb der Lagerbuchse 14 drehbar ist. Die Andruckfeder 18 und damit der Exzenterbund 16 sowie die Achse 13 des Zerhackers 11 wird in die Position gemäß Figur 3b gebracht und über die Andruckfeder 18, deren Bohrung über den zugehörigen Positionierstift 19 greift. Danach nimmt der Zerhacker 11 innerhalb des Behälters 5 die vorgesehene, hier die maximal äußere Position ein. Die Andruckfeder 18 wird mit dem Kniehebelspanner 22 gegen den Bund 15 am Lager 12 verspannt und damit die Position des Zerhackers 11 im Deckel 1 fixiert.

Bei dieser Neueinstellung hat sich der Abstand der Achse 13 des Zerhackers 11 gegenüber der Achse 24 des zugehörigen Antriebes verändert und die Spanneinrichtung 25 mit den Führungsrädern 27 wird derart positioniert, dass der Zahnriemen 23 unter einer erforderlichen Spannung steht. Durch Drehen des Befestigungsgriffes 29 an der Arretierungsschraube wird diese Position der Spanneinrichtung 25 gesichert.

### Liste der verwendeten Bezugszeichen

- 1: Deckel
- 2: Dichtfläche
- 3': Rand
- 3": Rand
- 4: Behälter
- 5: Behälter
- 6: Dichtring
- 7: Achse
- 8: Rührwerkslagerung
- 9: Mischrotor
- 10: Mischrotor
- 11: Zerhacker
- 12: Lager
- 13: Achse
- 14: Lagerbuchse
- 15: Bund
- 16: Exzenterbund
- 17: Dichtung
- 18: Andruckfeder
- 19: Positionierstift
- 20: Griff
- 21: Abstützpunkt
- 22: Kniehebelspanner
- 23: Zahnriemen
- 24: Achse
- 25: Spanneinrichtung
- 26: Achse
- 27: Führungsräder
- 28: Schlitz
- 29: Befestigungsgriff

## Patentansprüche

1. Mischgranulator mit einem zylindrischen Mischbehälter, einem Deckel (1), der den Mischbehälter einseitig rechtwinklig zu dessen zentrischen Achse (7) abschließt, wobei der Deckel (1) derart ausgebildet ist, dass er wahlweise mit mindestens zwei Behältern (4, 5) unterschiedlichen Durchmessers kombiniert werden kann, einem Rührwerk, welches in der Achse (7) im Deckel (1) gelagert ist, und einem in einer Achse (13) mit einem radialen Abstand zur Achse (7) im Deckel (1) gelagerten Zerhacker (11), **dadurch gekennzeichnet, dass**
- in einem radialen Abstand zur Achse (7) im Deckel (1) ein Lager vorgesehen ist,
- in dem der Zerhacker (11) in unterschiedlichen Positionen arretiert werden kann,
- dass eine Arretiervorrichtung vorhanden ist, mit der das Lager gegenüber dem Deckel (1) in den Positionen arretiert werden kann, in denen der Zerhacker (11) innerhalb der wahlweise einsetzbaren Behälter (4, 5) die jeweils technologisch vorgegebene Position einnimmt.

2. Mischgranulator nach Anspruch 1, **dadurch gekennzeichnet, dass** das Lager (12) im Deckel (1) drehbar ist und exzentrisch zu seiner Drehachse oberhalb des Deckels (1) einen Exzenterbund (16) aufweist, in dessen zentrischen Achse (13) der Zerhacker (11) gelagert ist und dass der Exzenterbund (16) in einem Positionselement geführt ist.

3. Mischgranulator nach Anspruch 2, **dadurch gekennzeichnet, dass** als Arretiereinrichtung und Positionselement eine Andrückfeder (18) mit einer Bohrung vorhanden ist, die den Exzenterbund (16) übergreift, in einem Abstützpunkt (21) gelagert ist und mittels eines Kniehebelspanners (22) gegen das Lager (12) verspannt werden kann.

4. Mischgranulator nach einem der Ansprüche 2 oder 3, **dadurch gekennzeichnet, dass** zur Positionierung des Lagers (12) mit dem Exzenterbund (16) im Lager (12) Positionierstifte (19) vorhanden sind, die in eine Bohrung im Positionselement eingreift.

5. Mischgranulator nach einem der Ansprüche 1 bis 4, **dadurch gekennzeichnet, dass** der Zerhacker (11) über einen Zahnriemen (23) von einem Antrieb mit einer Achse (24) angetrieben wird und dass eine Spanneinrichtung (25) vorhanden ist, die geeignet ist, bei Veränderung des Abstandes zwischen der Achse (13) des Zerhackers (11) und der Achse (21) des Antriebes eine gleichbleibende Spannung des Zahnriemens (23) aufrecht zu erhalten.

## Claims

1. Mixing granulator with a cylindrical mixing container, a cover (1) which closes off the mixing container on one side at a right angle to the centre axis (7) of said cover, wherein the cover (1) is designed in such a manner that it can optionally be combined with at least two containers (4, 5) of different diameter, with an agitator which is mounted on the axis (7) in the cover (1), and with a chopper (11) which is mounted on an axis (13) at a radial distance from the axis (7) in the cover (1), **characterized in that**
- a bearing is provided at a radial distance from the axis (7) in the cover (1),
- the chopper (11) being able to be locked in different positions in said bearing,
- **in that** there is a locking device with which the bearing can be locked in relation to the cover (1) in the positions in which the chopper (11) adopts the respectively technologically predefined position within the optionally useable containers (4, 5).

2. Mixing granulator according to Claim 1, **characterized in that** the bearing (12) is rotatable in the cover (1) and, eccentrically with respect to the axis of rotation thereof, has, above the cover (1), an eccentric collar (16), on the central axis (13) of which the chopper (11) is mounted, and **in that** the eccentric collar (16) is guided in a positioning element.

3. Mixing granulator according to Claim 2, **characterized in that**, as locking device and positioning element, there is a press-on spring (18) with a bore, said press-on spring engaging over the eccentric collar (16), being mounted at a supporting point (21) and being able to be braced against the bearing (12) by means of a toggle clamp (22).

4. Mixing granulator according to either of Claims 2 and 3, **characterized in that**, in order to position the bearing (12) with the eccentric collar (16), there are positioning pins (19) in the bearing (12), the positioning pins engaging in a bore in the positioning element.

5. Mixing granulator according to one of Claims 1 to 4, **characterized in that** the chopper (11) is driven by a drive with an axis (24) via a toothed belt (23), and **in that** there is a tensioning device (25) which is suitable for maintaining a consistent tension of the toothed belt (23) upon a change in the distance between the axis (13) of the chopper (11) and the axis (21) of the drive.

## Revendications

1. Granulateur mélangeur comprenant un récipient de mélange cylindrique, un couvercle (1) qui ferme le récipient de mélange d'un côté à angle droit par rapport à son axe central (7), le couvercle (1) étant réalisé de telle sorte qu'il puisse être combiné au choix avec au moins deux récipients (4, 5) de diamètres différents, un agitateur, qui est monté dans l'axe (7) dans le couvercle (1), et un hachoir (11) monté dans un axe (13) à une distance radiale de l'axe (7) dans le couvercle (1), **caractérisé en ce**
- **qu'**un palier est prévu à une distance radiale de l'axe (7) dans le couvercle (1),
- dans lequel palier le hachoir (11) peut être bloqué dans différentes positions,
- en ce qu'un dispositif de blocage est prévu, avec lequel le palier peut être bloqué par rapport au couvercle (1) dans les positions dans lesquelles le hachoir (11) adopte à l'intérieur des récipients (4, 5) pouvant être utilisés au choix, la position prédéfinie dans chaque cas par la technologie.

2. Granulateur mélangeur selon la revendication 1, **caractérisé en ce que** le palier (12) peut tourner dans le couvercle (1) et présente, en position excentrée par rapport à son axe de rotation au-dessus du couvercle (1), un épaulement excentrique (16) dans l'axe central (13) duquel le hachoir (11) est monté, et **en ce que** l'épaulement excentrique (16) est guidé dans un élément de positionnement.

3. Granulateur mélangeur selon la revendication 2, **caractérisé en ce qu'**un ressort de pression (18) avec un alésage est prévu en tant que dispositif de blocage et d'élément de positionnement, lequel ressort de pression vient en prise par le dessus avec l'épaulement excentrique (16) est monté dans un point de support (21) et peut être tendu au moyen d'une grenouillère (22) contre le palier (12).

4. Granulateur mélangeur selon l'une quelconque des revendications 2 ou 3, **caractérisé en ce que** pour le positionnement du palier (12) avec l'épaulement excentrique (16) dans le palier (12), des goupilles de positionnement (19) sont prévues, lesquelles viennent en prise dans un alésage dans l'élément de positionnement.

5. Granulateur mélangeur selon l'une quelconque des revendications 1 à 4, **caractérisé en ce que** le hachoir (11) est entraîné par le biais d'une courroie dentée (23) par un entraînement avec un axe (24) et **en ce qu'**un dispositif de serrage (25) est prévu, lequel est approprié lors d'une variation de la distance entre l'axe (13) du hachoir (11) et l'axe (21) de l'entraînement, pour maintenir une tension constante de la courroie dentée (23).
